# EUROPÄISCHE PATENTSCHRIFT

(11) **EP 1 027 223 B1**
(45) Veröffentlichungstag und Bekanntmachung des Hinweises auf die Patenterteilung: **22.10.2003**
(21) Anmeldenummer: 98961072.0
(22) Anmeldetag: 06.11.1998
(51) Int. Cl.: B60J 5/04

(54) **INTEGRALE TÜRINNENVERSTÄRKUNG**
INTEGRAL INSIDE DOOR REINFORCEMENT
RENFORCEMENT INTERIEUR INTEGRE DE PORTIERE

(30) Priorität: 06.11.1997 DE 19748970
(43) Veröffentlichungstag der Anmeldung: 16.08.2000
(73) Patentinhaber: Weber, Norbert, 52062 Aachen (DE)
(72) Erfinder: Weber, Norbert, 52062 Aachen (DE)
(74) Vertreter: Draudt, Axel Hermann Christian, Dipl.-Ing.
(86) Internationale Anmeldenummer: DE9803252
(87) Internationale Veröffentlichungsnummer: WO99024278

(56) Entgegenhaltungen:
- WO-A-94/07709
- WO-A-98/43842
- US-A- 4 948 196
- US-A- 5 364 157

## Beschreibung

Die Erfindung betrifft eine Fahrzeugtür mit integraler Türinnenverstärkung nach dem Oberbegriff des Hauptanspruchs.

Die Fahrzeugtür mit integraler Türinnenverstärkung dient der erhöhten Sicherheit der Fahrgäste. Sie soll sowohl bei Frontal- als auch bei seitlichem Zusammenstoß eine Verformung verhindern. Insbesondere muß dafür gesorgt werden, daß die Fahrzeugtür auch nach einem Unfall noch vorschriftsmäßig geöffnet werden kann. Gleichzeitig darf die Fahrzeugtür nicht so steif gestaltet werden, daß bei dem trägheitsbedingten Aufprall des Fahrgastes gegen die Türinnenseite die zulässigen Lasten und Verformungswege überschritten werden.

Aus der WO-A-94/07709 ist ein Sicherheitsstab bekannt, der im Querschnitt entlang der Längsachse ein trapezförmiges Profil aufweist. Nachteilig ist, daß die Konstruktion den Fahrgast im wesentlichen nur gegen Seitenaufprall schützt.

Üblicherweise ist die integrale Türinnenverstärkung ein längliches Profil mit einem geeigneten Querschnitt. Es werden unterschiedliche Querschnittsformen verwendet. Eine derartige integrale Türinnenverstärkung ist für die erforderliche Aufnahme der Kräfte üblicherweise mit dem Türinnenblech verbunden, wobei insbesondere Punktschweißungen verwendet werden. Diese Verstärkungen dienen der Knickaussteifung der Fahrzeugtür unterhalb der Seitenscheibenbrüstung.

Der Erfindung liegt daher die Aufgabe zugrunde, eine Fahrzeugtür mit integraler Türinnenverstärkung der eingangs genannten Art anzugeben, die mit technisch einfachen Mitteln die eingangs genannten an sich gegenläufigen Zielrichtungen in optimaler Weise erfüllt.

Diese Aufgabe wird erfindungsgemäß gelöst durch eine Fahrzeugtür mit integraler Türinnenverstärkung für eine definierte Übertragung von Lasten von der A- auf die B-Säule und mit Türblechen, die wenigstens ein Außenblech, wenigstens ein Innenblech und wenigstens ein Türabschlußblech aufweisen, welches im wesentlichen senkrecht zu Außen- und Innenblech verläuft und wobei die integrale Türinnenverstärkung als längliches Profil ausgebildet und mit wenigstens einem topfförmigen Abschnitt versehen ist, dadurch gekennzeichnet, daß. Sein topfförmiger Abschnitt ist im Bereich des in Fahrtrichtung gesehen vorderen Türabschnittes angeordnet ist und die Türinnenverstärkung mit ihrer Längsrichtung etwa in Höhe des Fensterausschnitts auf das Türscharnier aufweist.

Dazu mündet der längliche Abschnitt des Profils in den topfförmigen Abschnitt ein. Die Achse des Topfes steht etwa senkrecht auf der Profillängsachse. Der topfförmige Abschnitt und dessen Übergang in das längliche Profil bilden ein relativ steifes Kastenprofil. Die Anordnung und Geometrie dieses topfförmigen Abschnittes zwischen den Enden der länglichen integralen Türinnenverstärkung wird so angepaßt, daß die erforderliche Steifigkeit erreicht wird.

Die erfindungsgemäße Formgebung der integralen Türinnenverstärkung der Fahrzeugtür nach den Merkmalen des Hauptanspruchs bildet die Grundlage für eine definierte Übertragung von Lasten von der A- auf die B-Säule. Die Form bildet außerdem die Grundlage, eine definierte Biegung der Gürtellinie zu erreichen, so daß die Tür nicht mit dem Rahmen verkeilt wird. Die Tür kann auch nach einem Frontalzusammenstoß unter üblichen Bedingungen noch ohne Werkzeug geöffnet werden.

Nach einer bevorzugten Ausführung der Fahrzeugtür mit integraler Türinnenverstärkung ist eine erste Verbindung mit dem Innenblech und eine zweite Verbindung mit dem Außenblech erfolgt. Zusammen mit dem topfförmigen Abschnitt bildet diese Verbindung einen torsionssteifen Lastpfad, der die Lastver-teilung beim Frontalzusammenstoß weiter verbessert.

Bevorzugt ist bei der Fahrzeugtür mit integraler Türinnenverstärkung eine Verbindung, die mit einem Türblech im Bereich des topfförmigen Abschnitts in Form mehrerer Verbindungspunkte erfolgt. Hierdurch wird die Lastverteilung beim Frontalzusammenstoß weiter verbessert.

Nach einer weiter bevorzugten Ausführung ist der topfförmige Abschnitt wenigstens an einem Seitenabschnitt und am Boden mit einem oder mehreren der Türbleche verbunden. Hierbei kann insbesondere der Boden mit dem Innenblech durch mehrere Punktschweißungen verbunden sein und die in Fahrt-richtung gesehen vorne liegende Seite des topfförmigen Abschnittes durch mehrere Punktschweißungen befestigt sein. Durch den gebildeten Verbund werden die Membranbelastungen reduziert. Die Topfseitenflächen wirken als Zugstreben und nehmen einen Großteil der Lasten auf. Die Überführung von Membran- in Zugspannungen führt zu reduzierten Spannungen und Verformungen.

Bevorzugt ist eine Fahrzeugtür mit integraler Türinnenverstärkung, bei der der Boden des topfförmigen Abschnitts und das dazu ent-gegengesetzte Ende des länglichen Profils mit dem Türinnen-blech verbunden sind. Hierdurch wird eine verbesserte Kraftübertragung erreicht.

Diese Anbindung, insbesondere im Zusammenwirken mit einer Topfgeometrie, bewirkt einen Lastpfad - in der Draufsicht eine Diagonalversteifung des Türkastens - der das nach fahrzeugaußen knickende Moment in der Tür reduziert.
Bei einer sonst relativ steifen Gestaltung des Innenbleches im Bereich der Rippen eines Insassen kann durch die Diagonalversteifung das Innenblech relativ weich gestaltet werden.

Vorteilhafterweise ist mit dem topfförmigen Abschnitt eine Scharnierbefestigung verbunden. Hierdurch lassen sich die am Scharnier wirkenden Kräfte direkt in die entsprechend steife Struktur der integralen Türinnenverstärkung einleiten.

Als topfförmiger Abschnitt ist auch anzusehen, wenn z.B. bei einem im wesentlichen U-förmigen Querschnitt des länglichen Abschnittes an dem Ende, das dem Scharnier zugewandt ist, ein senkrecht zur Längsachse verlaufendes Abschlußblech z.B. eingeschweißt ist oder wenn z.B. abschnittsweise der U-förmige Querschnitt verbreitert ist.

Noch vorteilhafter ist eine Fahrzeugtür mit integraler Türinnenverstärkung, bei der die Scharnierbefestigung an der zur Längsachse etwa senkrechten Endfläche des topfförmigen Abschnittes angeordnet ist.

Die Erfindung wird anhand der in den Figuren schematisch dargestellten Ausführungsbeispiele näher erläutert.

Die integrale Türinnenverstärkung ist als längliches Profil 1 mit einem topfförmigen Abschnitt 2 ausgebildet. Im übrigen besteht das Profil im wesentlichen aus einer Basisfläche 3, an die sich abgekantete Seitenflächen 3a und 3b anschließen. Der topfförmige Abschnitt 2 besteht im wesentlichen aus Boden 2a und den Seitenflächen 2b.

In der Zeichnung sind nur zwei der Seitenflächen mit Bezugszeichen versehen. Die Aufgabe der Erfindung wird grundsätzlich durch jede Art der Versteifung des länglichen Profils gelöst. So könnte der topfförmige Abschnitt 2 z.B. auch durch einen oder mehrere Stege gebildet werden, wobei diese Stege z.B. mit der Basisfläche 3 verbunden sind (z.B. verschweißt oder vernietet). Derartige Stege würden in etwa senkrecht zur Basisfläche 3 stehen und z.B. auch im wesentlichen senkrecht zu den abgekanteten Seitenflächen 3a,3b, wobei insbesondere eine Verbindung auch mit diesen abgekanteten Seitenflächen 3a, 3b vorgesehen sein kann. Im Bereich der abgekanteten Seitenfläche 3a ist die integrale Türinnenverstärkung etwa in Höhe des Fensterausschnittes mit dem Außenblech 31 verbunden. Unterhalb der Flucht der Linie 4 ist an der in Fahrtrichtung gesehen vorderen Seitenfläche 2b (Steg) eine Befestigung 5 für das Türscharnier 35 vorgesehen. Im Bereich des Bodens 2a sowie am entgegengesetzten Ende 7, bei einem Steg wäre dies entsprechend die Basisfläche 3, ist die integrale Türinnenverstärkung mit einem dem Insassen zugewandten Blech verbunden, dem Innenblech 10. Im Bereich der Scharnierbefestigung 5 (vordere Seitenfläche 2b bzw. Steg) ist die integrale Türinnenverstärkung an dem vorderen Türabschlußblech befestigt, welches üblicherweise als ein integraler Bestandteil des Innenbleches 10 von diesem abgekantet ausgebildet ist.

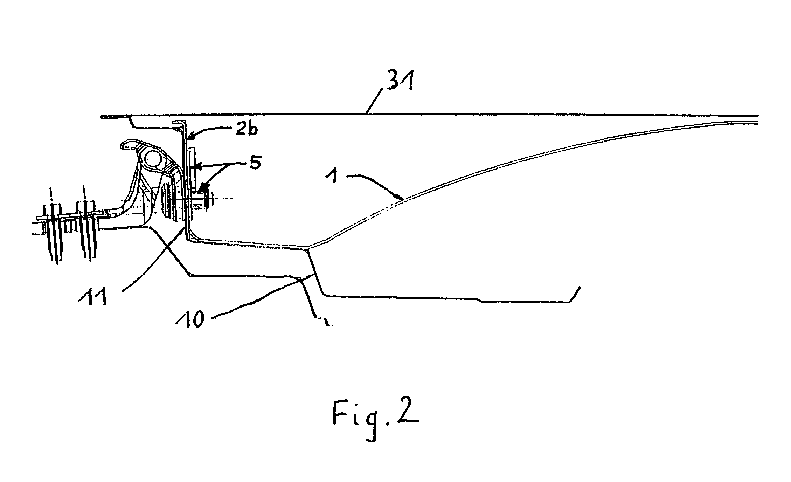

Fig.2 zeigt den Scharnierbereich in einem Horizontalschnitt. Die integrale Türinnenverstärkung ist mit dem Innenblech 10 bzw. dessen Abschnitt 11 verbunden, welcher als Türabschlußblech zu sehen ist. Im Bereich der Stegfläche 2b der integralen Türinnenverstärkung ist die Befestigung 5 für das Scharnier vorgesehen. Die Verwendung der integralen Türverstärkung als direkte Anbindung an das Scharnier wird als besonders vorteilhaft angesehen, weil hierdurch die am Scharnier wirkenden Kräfte direkt in die entsprechend steife Struktur eingeleitet werden. Hierdurch wird eine Mehrfachfunktion für den Frontal- und Seitenstoß, sowie die Versteifung bei vertikaler Last auf die Tür erreicht. Die Anbindung der integralen Türinnenverstärkung an das Scharnier kann in unterschiedlichster Weise erfolgen. In Fig.2 ist lediglich beispielhaft eine mit dem Abschnitt 2b verbundene Mutter zur Aufnahme eines Scharnierbefestigungsbolzens 51 dargestellt.

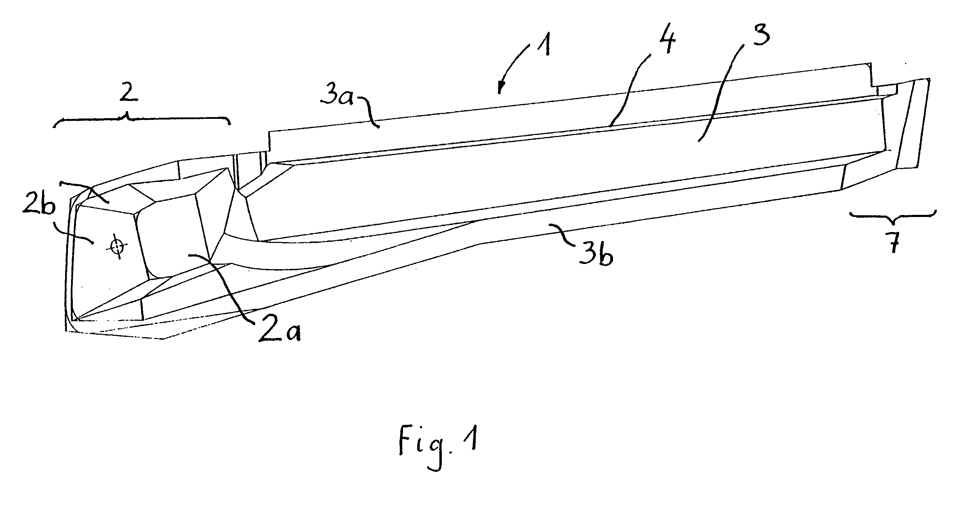

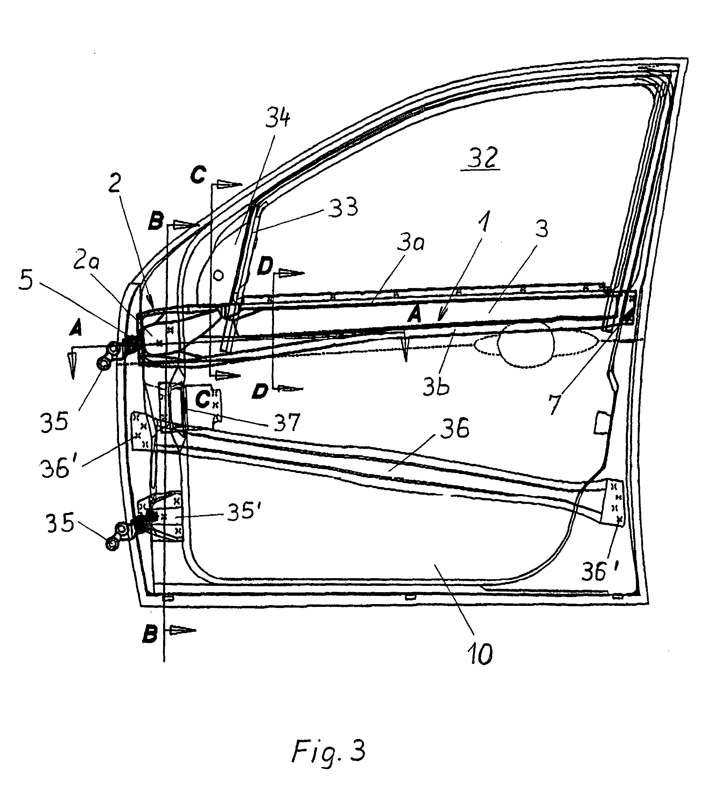

Fig.3 zeigt die Gesamtansicht einer Innenseite eines Innenblechs 10 einer in Fahrtrichtung eines Fahrzeugs gesehenen linken .Fahrzeugtür. Die erfindungsgemäße Türinnenverstärkung, nämlich das längliche Profil 1, ist unterhalb eines Blechausschnitts 32 für eine Verglasung der Tür vorhanden, also auf Höhe der Gürtellinie. Das längliche Profil 1 entspricht im wesentlichen dem in Fig.1 dargestellten. Der Blechausschnitt 32 wird durch einen sich auf drei Seiten erstreckenden Fensterglas-Führungskanal 33 begrenzt. In Fahrtrichtung vor dem linken vertikalen Schenkel des Kanals 33 befindet sich ein Spiegeldreiecksbereich 34, der der Befestigung eines Außenspiegels dient. Auf der Höhe des länglichen Profils 1 und mit Abstand darunter in der Nähe der Unterkante des Innenblechs 10 befindet sich jeweils ein Türscharnier 35, mit denen das Innenblech 10 gemeinsam mit anderen Türbauteilen an der Karosserie angelenkt ist. Die Türscharniere 35 sind mit der Befestigung 5 am Türinnenblech 10 befestigt. Das untere Scharnier 35 ist mit einer unteren Scharnierverstärkung 35' am Innenblech 10 befestigt. Auf einer mittleren Höhe zwischen den Scharnieren 35 ist ein Seiteneindrückträger 36 vorhanden, der sich über die gesamte Breite des Innenblechs 10 erstreckt und mit Befestigungsstellen 36' daran befestigt ist. Des weiteren ist zwischen den Türscharnieren eine Türhaltebandverstärkung 37 vorhanden.

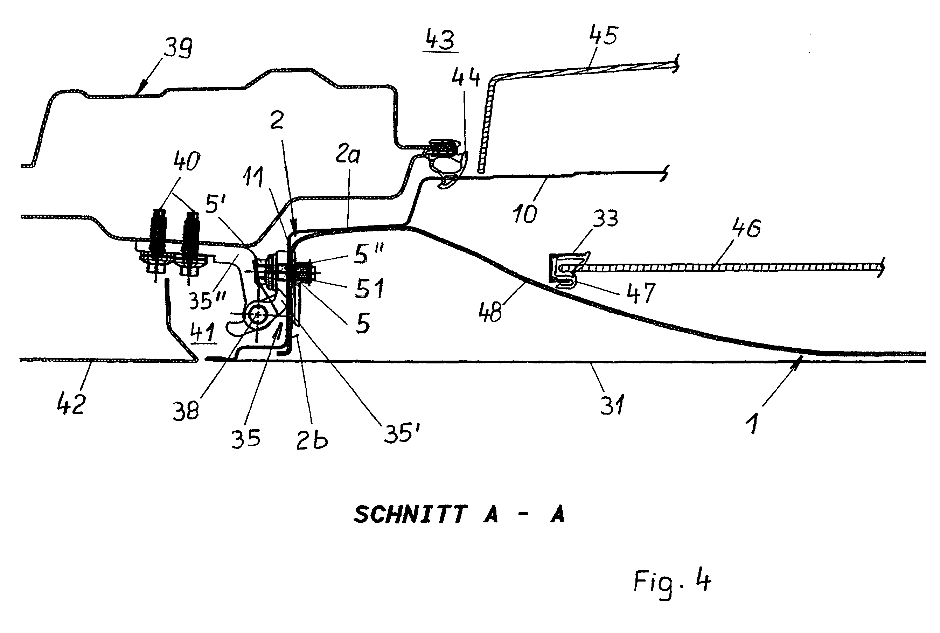

In Fig.4 ist die horizontale Profilierung des Innenblechs 10 auf Höhe des länglichen Profils 1 dargestellt. Es ist ersichtlich, daß das Innenblech 10 einen abgekanteten Abschnitt 11 hat, an dem das Türscharnier 35 mittels der Befestigung 5 angeschlagen ist. Als Befestigungsmittel der Befestigung 5 ist eine Befestigungsschraube 5' dargestellt, die in eine Befestigungsmutter 5'' eingeschraubt ist und mit ihrem Kopf den flügelseitigen Bandteil 35' mit dem Abschnitt 11 zusammenklemmt. Über das flügelseitige Scharnierteil 35', eine Gelenkachse 38 und ein karosserieseitiges Scharnierteil 35'' ist der Türflügel an der Karosserie befestigt, nämlich an der A-Säule 39. Der Befestigung dienen hier die dargestellten Schraubbefestigungen 40. Ein Falzbereich 41, der unter anderem der Aufnahme der Türscharniere 35 dient, wird von einer Außenhaut 42 eines im weiteren nicht dargestellten Kotflügels abgedeckt, wie auch von dem Außenblech 31 der Tür, das mit dem Abschnitt 11 des Innenblechs 10 verbördelt ist. Einer Abdichtung eines Fahrgastraums 43 gegen den Falzbereich 41 beziehungsweise die Außenseite des Außenblechs 31 dient eine Dichtung 44, die innenseitig an dem Innenblech 10 abdichtend anliegt, das im übrigen von einer Türinnenverkleidung 45 abgedeckt ist.

Zwischen dem Innenblech 10 und dem im Abstand davon angeordnete Außenblech 31 befindet sich Fensterglas 46, das in Fig.4 an einer Kante von dem Fensterglas-Führungskanal 33 vertikal zur Darstellungsebene in einer Dichtung 47 geführt ist. Zwischen dem Glas 46 und dem Außenblech 31 ist das längliche Profil 1 angeordnet, und zwar mit seinem topfförmigen Abschnitt 2 in Fahrtrichtung vorne. Der Boden 2a des topfförmigen Abschnitts 2 ist mit dem Innenblech 10 an mehreren Stellen verschweißt, vergleiche Fig.3. Eine der Seitenflächen 2b ist mit dem vom Innenblech 10 abgekanteten Abschnitt 11 mit Hilfe des Scharnierbefestigungsbolzens 51 verbunden. Der Abschnitt 11 bildet ein Türabschlußblech.

Vom Boden 2a des topfförmigen Abschnitts 2 erstreckt sich ein Übergangsabschnitt 48 des länglichen Profils 1 unter kontinuierlicher Formänderung in Richtung auf das Außenblech 31. Der Übergangsabschnitt 48 ist so geformt, daß sich eine definierte Biegung der Gürtellinie ergibt. Es findet insbesondere eine Versteifung im Spiegeldreiecksbereich statt, wo im Fall frontalwirkender Kräfte vornehmlich mit Knickbelastungen der Tür zu rechnen ist.

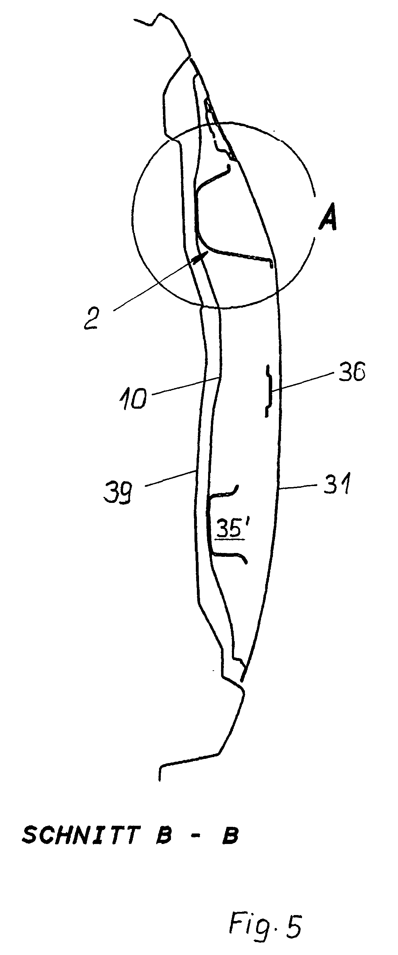

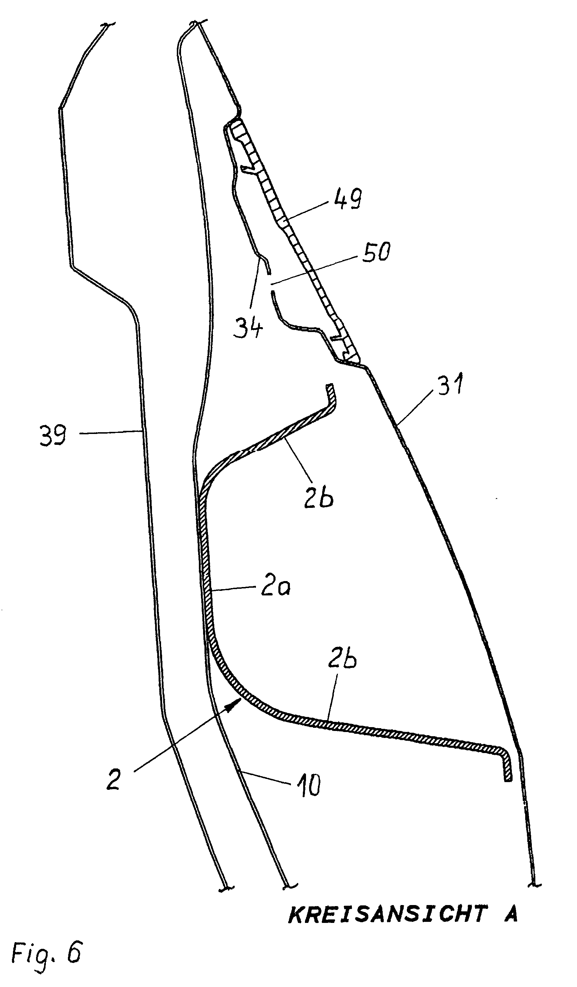

Der in Fig.5 dargestellte vertikale Schnitt B-B der Fig.3 zeigt schematisch die wichtigsten Türbauteile in der Nähe der Türscharniere 35. In Verbindung mit Fig.6, der Kreisansicht A der Fig.5, ist besonders die Topfform des topfförmigen Abschnitts 2 gut erkennbar. Der topfförmige Abschnitt 2 nimmt den Zwischenraum zwischen dem Außenblech 31 und dem Innenblech 10 im Bereich der Gürtellinie der Tür, also unterhalb des Blechausschnitts 32, fast vollkommen ein. Die Seitenflächen 2b, die praktisch senkrecht zum Boden 2a angeordnet sind und dementsprechend auch etwa im rechten Winkel zu der in Fig.4 dargestellten Seitenfläche 2b ausgebildet sind, bilden gemeinsam mit dem Übergangsabschnitt 48 eine in allen Ebenen sehr steife Struktur. Oberhalb dieser Struktur befindet sich ein Spiegelfuß 49, der beispielsweise aus Kunststoff besteht und mit dem Spiegeldreiecksbereich 34 in nicht dargestellter Weise zum Beispiel durch ein Befestigungsloch 50 hindurch befestigt ist. Unterhalb des länglichen Profils 1 beziehungsweise des topfförmigen Abschnitts 2 befindet sich der Seiteneindrückträger 36. Das Innenblech 10 des Türflügels ist derart geformt, daß es der A-Säule 39 der Fahrzeugkarosserie angepaßt ist.

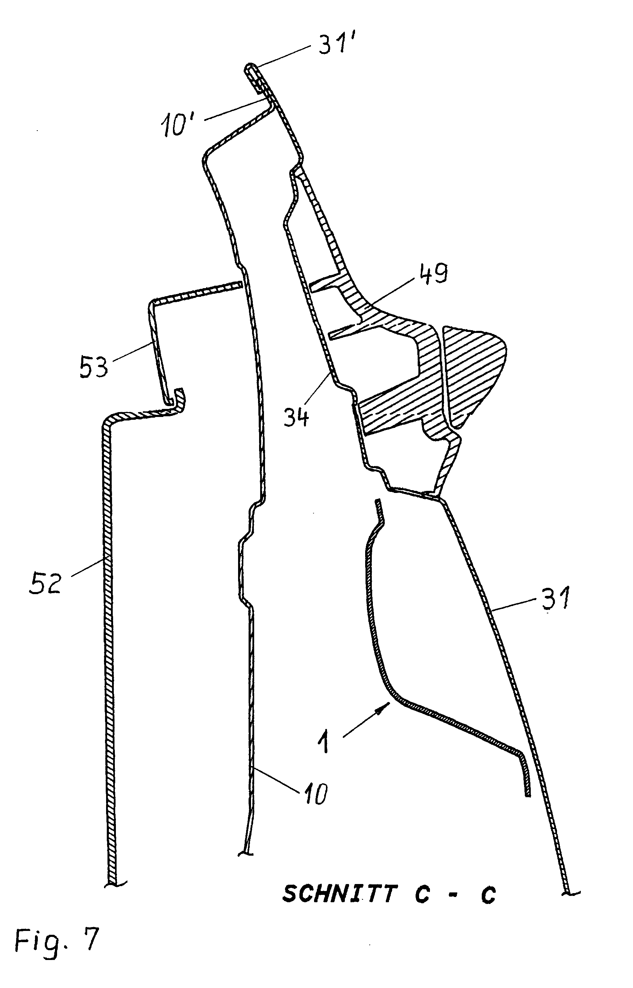

In Fig.7 ist gemäß dem Schnitt C-C dargestellt, wie sich das längliche Profil 1 infolge des aus Fig.4 ersichtlichen Übergangsabschnitts 48 dem Außenblech 31 annähert, wobei unterhalb des Spiegeldreiecksbereichs 34 zur Aufnahme des Spiegelfußes 49 noch stets eine erhebliche Gürtellinienverstärkung vorhanden ist. Das an seiner Oberkante 10' mit der Oberkante 31' des Außenblechs 31 verbördelte Innenblech 10 ist zum Fahrgastraum 43 hin mit einer zum Beispiel aus Kunststoff bestehenden Türinnenverkleidung 52 verkleidet, die im Spiegeldreiecksbereich 34 durch eine Spiegeldreiecksverkleidung 53 ergänzt ist.

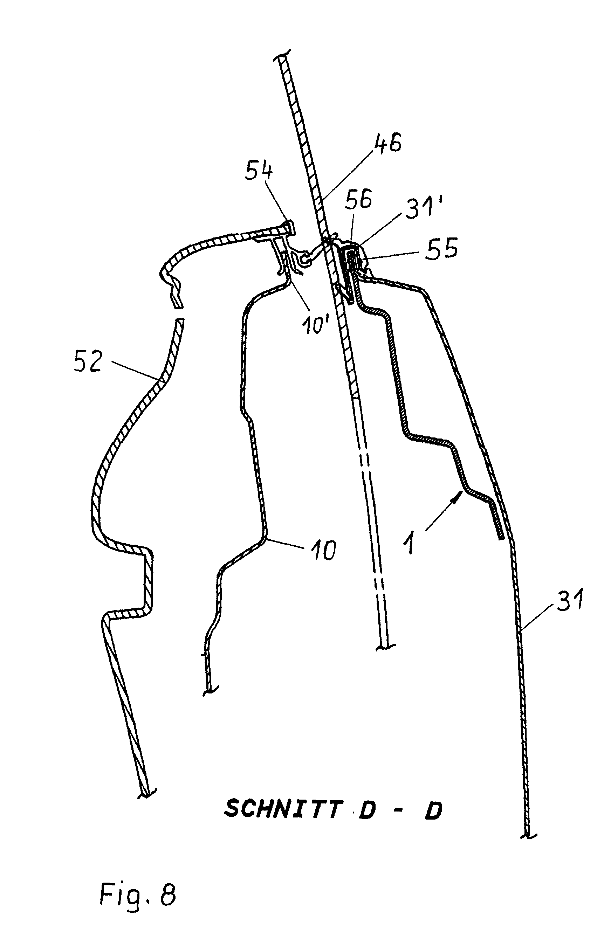

In Fig.8 stellt sich die Ausbildung der Gürtellinienverstärkung des Außenblechs 31 noch weiter detailliert dar. Der Schnitt D-D ist außerhalb des Spiegeldreiecksbereichs 34 gelegt, so daß das Fensterglas 46 abgebildet wird, an dem innen eine Scheibeninnendichtung 54 anliegt, und an dem außen eine Scheibenaußendichtung 55 abdichtend anliegt. Die Scheibeninnendichtung 54 ist in dargestellter Weise auf die Türinnenverkleidung 52 aufgesteckt, wie auch auf die Oberkante 10' des Innenblechs 10. Die Scheibenaußendichtung 55 ist sowohl auf eine horizontale Oberkante 31' des Außenblechs 31 aufgesteckt wie auch auf eine obere Kante 56 des länglichen Profils 1. Die obere Kante 56 ist mit der Oberkante 31' fest verbunden, z.B. verschweißt. Die Verbindung erstreckt sich etwa von dem Spiegeldreiecksbereich 34 bis zu einem dem topfförmigen Abschnitt 2 entgegengesetztem Ende 7, vergleiche Fig.3. Der Querschnitt des länglichen Profils 1 ist hier so abgeflacht, daß er Einbauten für die Verglasung nicht stört.

## Patentansprüche

1. Fahrzeugtür mit integraler Türinnenverstärkung für eine definierte Übertragung von Lasten von der A- auf die B-Säule und mit Türblechen, die wenigstens ein Außenblech (31), wenigstens ein Innenblech (10) und wenigstens ein Türabschlußblech aufweisen, welches im wesentlichen senkrecht zu Außen- und Innenblech verläuft und wobei die integrale Türinnenverstärkung als längliches Profil (1) ausgebildet und mit wenigstens einem topfförmigen Abschnitt (2) versehen ist, **dadurch gekennzeichnet, daß** ein topfförmiger Abschnitt (2) im Bereich des in Fahrtrichtung gesehen vorderen Türabschnittes angeordnet ist und die Türinnenverstärkung mit ihrer Längsrichtung etwa in Höhe des Fensterausschnitts auf das Türscharnier weist.

2. Fahrzeugtür mit integraler Türinnenvestärkung nach Anspruch 1, **dadurch gekennzeichnet, daß** eine erste Verbindung (2a, 7) mit dem Innenblech und eine zweite Verbindung (3a) mit dem Außenblech erfolgt.

3. Fahrzeugtür mit integraler Türinnenverstärkung nach Anspruch 1 oder 2, **dadurch gekennzeichnet, daß** eine Verbindung mit einem Türblech im Bereich des topfförmigen Abschnittes (2) in Form mehrerer Verbindungspunkte erfolgt.

4. Fahrzeugtür mit integraler Türinnenverstärkung nach einem der Ansprüche 1 bis 3, **dadurch gekennzeichnet, daß** der topfförmige Abschnitt an wenigstens einem Seitenabschnitt und am Boden mit einem oder mehreren der Türbleche verbunden ist.

5. Fahrzeugtür mit integraler Türinnenverstärkung nach einem der Ansprüche 1 bis 4, **dadurch gekennzeichnet, daß** der Boden (2a) des topfförmigen Abschnittes (2) und das dazu entgegengesetzte Ende (7) des länglichen Profils (1) mit dem Türinnenblech verbunden sind.

6. Fahrzeugtür mit integraler Türinnenverstärkung nach einem der Ansprüche 1 bis 5, **dadurch gekennzeichnet, daß** mit dem topfförmigen Abschnitt (2) eine Scharnierbefestigung (5) verbunden ist.

7. Fahrzeugtür mit integraler Türinnenverstärkung nach Anspruch 6, **dadurch gekennzeichnet, daß** die Scharnierbefestigung (5) an der zur Längsachse etwa senkrechten Endfläche (2b) des topfförmigen Abschnittes (2) angeordnet ist.

## Claims

1. Vehicle door having an integral inside door reinforcement for a defined transmission of loads from the A-pillar to the B-pillar, and having door panels which have at least one outside panel, at least one inside panel and at least one door end panel which runs essentially perpendicularly with respect to the outside panel and inside panel, and the integral inside door reinforcement being designed as an elongated profile (1) and being provided with at least one cup-shaped section (2), **characterized in that** a cup-shaped section (2) is arranged in the region of the front door section, as seen in the direction of travel, and the inside door reinforcement points with its longitudinal direction towards the door hinge approximately level with the window cutout.

2. Vehicle door having an integral door reinforcement according to Claim 1, **characterized in that** there is a first connection (2a,7) to the inside panel and a second connection (3a) to the outside panel.

3. Vehicle door having an integral inside door reinforcement according to Claim 1 or 2, **characterized in that** a connection to a door panel takes place in the form of a plurality of connecting points in the region of the cup-shaped section (2).

4. Vehicle door having an integral inside door reinforcement according to one of Claims 1 to 3, **characterized in that** the cup-shaped section is connected at at least one side section and at the bottom to one or more of the door panels.

5. Vehicle door having an integral inside door reinforcement according to one of Claims 1 to 4, **characterized in that** the bottom (2a) of the cup-shaped section (2) and that end (7) of the elongated profile (1) which is opposite thereto are connected to the inside door panel.

6. Vehicle door having an integral inside door reinforcement according to one of Claims 1 to 5, **characterized in that** a hinge fastening (5) is connected to the cup-shaped section (2).

7. Vehicle door having an integral inside door reinforcement according to Claim 6, **characterized in that** the hinge fastening (5) is arranged on that end surface (2b) of the cup-shaped section (2) which is approximately perpendicular with respect to the longitudinal axis.

## Revendications

1. Porte de véhicule avec renfort interne intégral de porte pour un transfert défini de charges de la colonne A à la colonne B et comprenant des panneaux de porte qui présentent au moins un panneau externe, au moins un panneau interne et au moins un panneau de fermeture de porte, qui s'étend essentiellement perpendiculairement au panneau externe et au panneau interne et où le renfort interne intégral de porte est réalisé en tant que profilé longitudinal (1) et est pourvu d'au moins une portion en forme de pot (2) **caractérisée en ce qu'**une portion en forme de pot (2) est disposée dans la partie de la portion de porte avant vue dans la direction d'avance et le renfort interne de porte fait face, avec sa direction longitudinale approximativement à la hauteur de la section de fenêtre, à la charnière de porte.

2. Porte de véhicule avec renfort interne intégral de porte selon la revendication 1, **caractérisée en ce qu'**il est effectué une première connexion (2a,7) au panneau interne et une deuxième connexion (3a) au panneau externe.

3. Porte de véhicule avec renfort interne intégral de porte selon la revendication 1 ou 2, **caractérisée en ce qu'**il est effectué une connexion avec un panneau de porte dans la région de la portion en forme de pot (2) sous la forme de plusieurs points de connexion.

4. Porte de véhicule avec renfort interne intégral de porte selon l'une quelconque des revendications 1 à 3, **caractérisée en ce que** la portion en forme de pot est connectée au niveau d'au moins une portion latérale et au niveau du fond à un ou plusieurs panneaux de porte.

5. Porte de véhicule avec renfort interne intégral de porte selon l'une quelconque des revendications 1 à 4, **caractérisée en ce que** le fond (2a) de la portion en forme de pot (2) et l'extrémité opposée (7) à celle-ci du profilé longitudinal (1) sont connectés au panneau interne de porte.

6. Porte de véhicule avec renfort interne intégral de porte selon l'une quelconque des revendications 1 à 5, **caractérisée en ce qu'**une fixation à charnière (5) est connectée à la portion en forme de pot (2).

7. Porte de véhicule avec renfort interne intégral de porte selon la revendication 6, **caractérisée en ce que** la fixation à charnière (5) est disposée sur la surface d'extrémité (2b) de la portion en forme de pot (2) approximativement perpendiculaire à l'axe longitudinal.
